# EUROPÄISCHE PATENTSCHRIFT

(11) **EP 2 047 142 B1**
(45) Veröffentlichungstag und Bekanntmachung des Hinweises auf die Patenterteilung: **02.05.2012**
(21) Anmeldenummer: 07725576.8
(22) Anmeldetag: 25.05.2007
(51) Int. Cl.: F16H 55/30

(54) **UMLENKROLLE MIT HÖHERER KETTENAUSNUTZUNG**
DEFLECTING ROLLER WITH INCREASED CHAIN UTILIZATION
POULIE DE RENVOI AVEC MEILLEURE UTILISATION DE LA CHAINE

(30) Priorität: 01.08.2006 DE 102006036163
(43) Veröffentlichungstag der Anmeldung: 15.04.2009
(73) Patentinhaber: Konecranes Plc, 05830 Hyvinkää (FI)
(72) Erfinder: WEINGÄRTNER, Jürgen, 74643 Kocherstetten (DE)
(74) Vertreter: Rüger, Barthelt & Abel
(86) Internationale Anmeldenummer: PCT/EP2007/004680
(87) Internationale Veröffentlichungsnummer: WO 2008/014836

(56) Entgegenhaltungen:
- EP-A- 0 269 557
- DE-A1- 1 425 974
- DE-A1- 3 201 210
- DE-B- 1 273 915
- GB-A- 648 940
- US-A- 3 376 756

## Beschreibung

Sogenannte Rundgliederketten setzen sich aus einzelnen miteinander verketteten Rundgliedern zusammen. Jeweils benachbarte Kettenglieder sind gegeneinander bezüglich der Längsachse der Kette um 90° gedreht. Jedes Kettenglied einer Rundgliederkette besteht aus einem gebogenen Drahtabschnitt, dessen freie Enden stumpf miteinander verschweißt sind.

In der Draufsicht auf die Flachseite setzt sich das Kettenglied aus zwei geraden, zueinander parallelen Abschnitten zusammen, die beide an jedem Ende in Halbkreisbögen übergehen. Der Radius der beiden Halbkreisbögen entspricht dem Mittenabstand der geraden Abschnitte. Die Projektion eines solchen flachliegenden Kettenglieds einer Rundgliederkette auf eine Ebene parallel zur Flachseite des Kettenglieds wird durch zwei Linien begrenzt, von denen die eine die Außenlinie ist und die andere die Innenlinie. Die Außenlinie setzt sich folglich aus zwei geraden Abschnitten, die zueinander parallel sind, und zwei Halbkreisbögen zusammen, deren Durchmesser dem Abstand der geraden Abschnitte entsprechen. Die Innenlinie verläuft an allen Stellen im gleichen Abstand zur Außenlinie, entsprechend dem Drahtdurchmesser.

Derartige Rundgliederketten werden zum Bewegen von Werkstücken oder Mitnehmern verwendet. Dies können z.B. Paletten sein, die längs seines Förderweges transportiert werden oder aber sie können als Lastaufnahmemittel von sogenannten Kettenzügen verwendet werden. Bei zwei- oder mehrsträngigen Kettenzügen muss die Kette über Umlenkrollen geführt werden. Die Umlenkrollen wirken formschlüssig mit den Kettengliedern zusammen. Beim Umlauf der Kette um die Umlenkrolle unterscheidet man zwischen stehenden Kettengliedern und liegenden Kettengliedern. Diese Unterscheidung geschieht aus der Sicht der Umlenkrolle. Unter einem liegenden Kettenglied wird ein Kettenglied verstanden, von dem eine Flachseite der Drehachse der Umlenkrolle zugekehrt ist. Ein stehendes Kettenglied ist ein solches Kettenglied, bei der die Flachseiten auf der Drehachse der Umlenkrolle senkrecht stehen.

Bei den bislang üblichen Umlenkrollen werden lediglich die liegenden Kettenglieder dazu verwendet, einen Formschluss mit der Umlenkrolle herzustellen. Wegen des unvermeidlichen Spiels der liegenden Kettenglieder wird hierbei das stehenden Kettenglied erheblich belastet, das bezogen auf den Laufweg der Kette um die Umlenkrolle herum am Scheitelpunkt liegt.

DE 1 425 974 wird als der nächste Stand der Technik betrachtet und beschreibt eine Anordnung aus einer Gliederkette und einer Umlenkrolle zum Umlenken der Gliederkette, wobei sich anhand der Kettentaschen ergibt, dass jedes Kettenglied aus einem gebogenen Draht besteht und
eine ebene Gestalt aufweisen kann, die sich aus zwei zueinander parallelen Abschnitten und zwei Halbkreisbögen zusammensetzt. Die Umlenkrolle weist folgendes auf:
einen Grundköper, der eine Außenumfangsfläche und eine Drehachse aufweist,
Kettentaschen, die sich an der Außenumfangsfläche befinden und die dazu eingerichtet sind die liegenden Kettenglieder aufzunehmen und Kraft von der Umlenkrolle auf die liegenden Kettenglieder zu übertragen,
Kettentaschen,
   - die sich an der Außenumfangflächen befinden,
   - die dazu eingerichtet sind die stehenden Kettenglieder aufzunehmen,
   - deren Anzahl der Anzahl der Kettentaschen für die liegenden Kettenglieder entspricht,
   - von denen jede für die steheden Kettenglieder Auflagebereiche aufweist, auf denen sich das jeweilige Kettenglied mit dem Kreisbogen auflegen kann, und
   - von denen je eine zwischen benachbarten Kettentaschen für die liegenden Kettenglieder diese Kettentaschen überschneidend angeordnet ist und
mit Zähnen,
   - von denen je einer zwischen zwei benachbarten Kettentaschen für die stehenden Kettenglieder angeordnet ist,
   - die dazu eingerichtet sind das stehende Kettenglied zu kammern und
   - von denen jeder von zwei Zahnflanken begrenzt ist, die in Umfangsrichtung zeigen.

Ein Kettenrad für eine Gliederkette ist auch aus DD 244 609 bekannt. Die Kettentaschen für die stehenden Kettenglieder weise Übergänge zu den beiden die Kettentasche begrenzenden Zähnen auf, deren Radien den Radien der Kettengliedes entsprechen. Im Anschluss an den Übergang erstreckt sich die Zahnflanke gerade bis zum freien Ende des Zahns.

Aus der EP 0 269 557 A1 ist eine zum Antrieb vorgesehene Kettennuss bekannt, die an die Änderung der Kettenteilung infolge von Verschleiß angepasst ist.

Beim Umlauf der unter Last stehenden Kette über die Kettennuss tritt zwischen benachbarten Kettengliedern eine Bewegung auf. Die Bewegung entsteht, weil die an sich unter Last gestreckte Kette durch die Umlenkrolle in eine Kreisbahn gezwungen wird.

Die Relativbewegung zwischen den Kettengliedern verursacht dort einen Reibverschleiß mit der Folge, dass sich an den betreffenden Stellen die Dicke des Kettengliedes vermindert. Unter Dicke des Kettengliedes versteht der Fachmann den Durchmesser den der Draht an der betreffenden Stelle hat.

Zufolge der Änderung der Kettenglieddicke wird die Kette länger, d.h. ihre Periodizität stimmt nicht mehr mit der Teilung der Umlenkrolle überein. Um dem Rechnung zu tragen, sind bei der bekannten Umlenkrolle die Kettentaschen für die stehenden Kettenglieder speziell geformt.

Die Kettentaschen für die stehenden Kettenglieder bilden eine in Umfangsrichtung der Kettennuss verlaufende Rille, die die Kettentaschen für die liegenden Kettenglieder durchsetzt. Der Grund dieser Rille beschreibt im weitesten Sinne ein reguläres n-Eck, wobei n gleich der Anzahl der Kettentaschen für die liegenden Kettenglieder ist. Die Seiten dieses regulären N-Ecks sind jeweils Kreisbögenausschnitte mit einem konstanten Krümmungsradius, der sehr groß gegenüber dem Krümmungsradius der Außenlinie des einzelnen Kettenglieds ist. Der Taschenboden weist längs seines Verlaufes keine Krümmungsänderung auf. Er geht lediglich am Ende in eine abgerundete Ecke des n-Ecks über, an der der nächste Taschenboden für die benachbarte Kettentasche eines stehenden Kettengliedes beginnt. Diese Ecke kann im weitesten Sinne auch als Zahn verstanden werden. Die Zahnspitze liegt mittig, d.h. zentriert in der Kettentasche für das liegende Kettenglied. Er endet deutlich unterhalb einer Ebene, die durch die der Drehachse benachbarte Flachseite des Kettenglieds definiert ist.

Fig. 2 dieser Druckschrift zum Stand der Technik zeigt die Verhältnisse zwischen dem stehenden Kettenglied und der zugehörigen Kettentasche bei Verwendung einer unbenutzten Rundgliederkette. Die benachbarten liegenden Kettenglieder halten das stehende Kettenglied im Abstand zum Taschenboden der Kettentasche für das betreffende stehende Kettenglied. Erst wenn sich infolge der Abnutzung die Kette längt, tritt eine geringfügige Verkantung des stehenden Kettenglieds auf, mit der Folge, dass sich das Kettenglied mit seinem Bug, der in Lastrichtung zeigt, an dem Taschenboden anlegt.

Die Tangente an der Berührungsstelle zwischen Taschenboden und Außenlinie des Kettenglieds verläuft unter einem sehr spitzen Winkel zu der Längsachse des stehenden Kettenglieds, womit über die punktförmige Berührungsstelle praktisch keine Krafteinleitung von der Umlenkrolle auf die Rundgliederkette bzw umgekehrt möglich ist.

Ausgehend hiervon ist es Aufgabe der Erfindung, eine Umlenkrolle zu schaffen, die die Kette weniger beansprucht und somit eine höhere Belastung einer Gliederketten aus einem vorgegebenen Material zulässt, verglichen mit der Kombination dieser Gliederkette mit einer Umlenkrolle nach dem Stand der Technik.

Die Konstrukteure bei der Anmelderin haben herausgefunden, dass eine höhere Belastung/Ausnutzung der Kette möglich wird, wenn bei der Umlenkung das stehende Kettenglied ab einer bestimmten Belastung von der Umlenkrolle in Längsrichtung gestützt wird. Um dies zu erreichen müssen die angrenzenden Zahnflanken, an der sich unter Last das stehende Kettenglied mit seinem Bug anlehnt, in besonderer Weise konfiguriert werden.

Die neue Umlenkrolle ist wie die Umlenkrolle aus dem Stand der Technik zum Umlenken von Gliederketten, insbesondere Rundgliederketten oder Profilstahlketten von Kettenzügen vorgesehen. Jedes Kettenglied der Gliederkette besteht aus einem gebogenen Drahtabschnitt und weist eine ebene Gestalt auf. Die Gestalt setzt sich aus zwei zueinander parallelen Abschnitten und zwei Halbkreisbögen zusammen.

Die erfindungsgemäße Umlenkrolle weist einen Grundkörper mit einer Außenumfangsfläche und einer zu der Außenumfangsfläche zentrischen Drehachse auf.

In dem Grundkörper sind Kettentaschen enthalten, die sich an der Außenumfangsfläche befinden und die dazu eingerichtet sind, die liegenden Kettenglieder aufzunehmen, damit diese nicht beim Umlenken über die Quer- oder Flachseite verbogen werden.

Weiterhin enthält die Umlenkrolle Kettentaschen, die sich ebenfalls an der Außenumfangsfläche befinden, und die dazu eingerichtet sind, die stehenden Kettenglieder aufzunehmen. Die Anzahl der Kettentaschen für die stehenden Kettenglieder entspricht der Anzahl der Kettentaschen für die liegenden Kettenglieder. Jede Kettentasche für die stehenden Kettenglieder weist Auflagebereiche auf, auf denen sich das jeweilige Kettenglied zumindest mit einem an den Kreisbogen anschließenden Teil seines geraden Abschnittes auflegen kann. Die Kettentaschen für die stehenden Kettenglieder sind jeweils zwischen benachbarten Kettentaschen für liegende Kettenglieder angeordnet und überschneiden sich mit diesen.

Zwischen benachbarten Kettentaschen für stehende Kettenglieder stehen Radialzähne vor, die dazu eingerichtet sind, das stehende Kettenglied in Längsrichtung zu kammern. Jeder der Zähne ist von zwei in Umfangsrichtung zeigenden Zahnflanken begrenzt.

Jede Zahnflanke definiert eine Zahnflankenkrümmungslinie, die in der Symmetrieebene liegt, die durch die Kettentasche für die stehenden Kettenglieder läuft und die auf der Drehachse senkrecht steht. Diese Symmetrieebene fällt mit der Symmetrieebene des stehenden Kettengliedes zusammen und verläuft zwischen den beiden seitlichen Flankenflächen, die durch das stehende Kettenglied definiert sind. Unter Flankenfläche ist dabei jene Ebene zu verstehen, die das Kettenglied an der jeweiligen Flanke tangential berührt.

Die Lage der Zahnflanke ist derart bemessen, dass die Zahnflankenkrümmungslinie in der Symmetrieebene einen Abstand von der in Lastrichtung zeigenden Außenlinie des Halbkreisbogens aufweist, der zu einem Kettenglied gehört, das in der Kettentasche angeordnet ist. Dieser Abstand ist dann vorhanden, wenn die beiden benachbarten liegenden Kettenglieder zentriert und ohne Einwirkung einer äußeren Kraft in ihren zugehörigen Kettentaschen liegen.

Aufgrund des Abstands zwischen der Zahnflankenkrümmungslinie und der Außenlinie des Halbkreisbogens, die beide in derselben die Drehachse rechtwinkelig schneidenden Ebene liegen, entsteht zwischen dem jeweiligen Bug des Kettenglieds und der benachbarten Zahnflanke ein bogenförmig gekrümmter und keilförmiger Spalt, dessen Breite sich in Richtung auf die Zahnspitze vergrößert. Dieser Spalt ist so bemessen, dass er sich beim Überschreiten einer vorgegebenen Kraft, die in der Gleiderliederkette wirkt, schließt. Dieses Schließen erfolgt zufolge einer elastischen Verformung des entsprechenden Halbkreisbogens des Kettenglieds.

Um eine möglichst gute Unterstützung für das stehende Kettenglied zu erhalten, sollte der Zahn eine möglichst große, radiale Höhe aufweisen. Allerdings wird die radiale Höhe dadurch begrenzt, dass das tangentiale Ablaufen der Gliederkette von der Umlenkrolle nicht behindert werden darf. Günstige Verhältnisse ergeben sich, wenn der Zahn über eine Fläche, die durch die der Drehachse benachbarte Flankenfläche des liegenden Kettengliedes definiert ist, in die der Zahn ragt, eine Höhe aufweist, die zwischen dem 0,16-fachen und dem 0,75-fachen der Dicke des Kettengliedes liegt.

Die Zahnhöhe ist, wie ohne weiteres einzusehen ist, von der Dicke des für die Kettenglieder verwendeten Drahts abhängig.

Eine gute Unterstützung des Kettenglieds durch die Zahnflanke wird erreicht, wenn die Zahnflanke biaxial gekrümmt ist. Dadurch ergibt sich wegen der großen Anlagefläche eine günstige Kraftverteilung sowohl in der Zahnflanke als auch in dem Bug des Kettenglieds.

Unter biaxial gekrümmt soll hierbei eine Krümmung verstanden werden, deren zugehöriger Krümmungsmittelpunkt auf einer Linie liegt, die parallel zur Zahnflankenkrümmungslinie in einem entsprechenden Abstand verläuft. Der gegenüber dieser Linie gemessene Krümmungsradius ist vorteilhafterweise nicht kleiner als der halbe Durchmesser des Drahtes, aus dem das Kettenglied hergestellt ist.

Der Abstand zwischen dem jeweiligen Bug des Kettengliedes und der Zahnflanke bzw. zwischen der Außenlinie und der Zahnflankenkrümmungslinie lässt sich über die Approximation mittels zweier Schmiegkreise ermitteln. Der eine Schmiegkreis ist eine Approximation der Außenlinie des Halbkreisbogens eines in die Umlenkrolle eingelegten stehenden Kettengliedes. Hierdurch wird ein Schmiegkreismittelpunkt definiert.

Die zweite Approximation ist ein Kreis, der die Zahnflankenkrümmungslinie approximiert und somit einen weiteren Mittelpunkt definiert. Der Mittelpunkt des Zahnflankenschmiegkreises ist gegenüber dem Mittelpunkt des Kettengliedschmiegkreises in Lastrichtung verschoben. Der Betrag der Verschiebung ist wiederum abhängig von der Drahtdicke für das Kettenglied und der Länge des Kettenglieds.

Zweckmäßigerweise liegen die beiden Mittelpunkte der Schmiegkreise auf einer Geraden, die zu den geraden Abschnitten des stehenden Kettengliedes parallel verläuft.

Je nach Art des Kettenglieds kann auch ein spitzwinkliger Verlauf vorteilhaft sein.

Die Zahnflankenkrümmungslinie kann exakt kreisförmig sein, was die Herstellung der Umlenkrolle vereinfacht. Die Zahnflankenkrümmungslinie kann auch denselben Verlauf aufweisen, den die Außenlinie definiert, wenn das Kettenglied einer bestimmten, beispielsweise der Nennlast ausgesetzt ist. Der Verlauf ist dann bei genauerer Betrachtung angenähert parabelförmig, was jedoch nach wie vor bedeutet, dass auch hier über die Strecke der Zahnflankenkrümmungslinie ein Schmiegkreis definiert werden kann. Der Schmiegkreis ist dann definiert als jene Kreislinie, bei der die Abstände zu der Zahnflankenkrümmungslinie minimal sind, d.h. die Kreislinie ist eine Regressionslinie. Die Abstände sind hierbei auf den entsprechenden Radien des Schmiegkreises gemessen.

Um eine möglichst große Lebensdauer der Umlenkrolle zu erzielen, ist es vorteilhaft, wenn sie aus einem gehärteten Stahl besteht, vorzugsweise einsatzgehärtet, um eine gewisse Nachgiebigkeit und Anpassungsfähigkeit zu erhalten, während andererseits die Abriebfestigkeit hoch bleibt.

Durch die Umlenkrolle führt vorteilhafterweise eine Achsbohrung hindurch, mit der sie auf eine Welle/Achse aufsteckbar ist.

Die Kettentaschen für die liegenden Kettenglieder sind wannenförmig gestaltet.

Die Kettentaschen für die stehenden Kettenglieder sind von den beiden einander zugekehrten Zahnflanken und einem Taschenboden begrenzt.

Der Taschenboden kann ebenfalls gekrümmt sein, wobei die Krümmungsachse rechtwinklig zur Drehachse liegt. Eine andere Möglichkeit besteht darin, einen Taschenboden zu verwenden, der eben ist und der an seinen an die Zahnflanken angrenzenden Bereich in eine entsprechende Krümmung übergeht, wie sie oben definiert ist.

Um eine übermäßige Belastung des Kettenglieds im Bereich der Schweißstelle zu vermeiden, kann der Taschenboden eine Vertiefung enthalten, durch die die Schweißnaht des Kettengliedes freigestellt ist.

Der Radius des Schmiegkreises der Zahnflankenkrümmungslinie kann gleich oder größer sein als der Radius des Schmiegkreises der Außenlinie des Halbkreisbogens. Die Lage der Mittelpunkte zueinander muss so gewählt werden, dass der Taschenboden tangential ohne Knick in die Zahnflanke einmündet. Das Verhältnis der beiden Radien ist wiederum abhängig vom Drahtdurchmesser bzw. der Größe des Kettengliedes und kann im Bereich zwischen dem Faktor 1,0 und 1,2 liegen.

Um das Ein- und Auslaufen des stehenden Kettengliedes auf die Zahnflanke zu verbessern, geht die Zahnflanke in der Nähe des Zahnkopfes vorzugsweise in eine Fasenfläche über. Die Fasenfläche kann eine gekrümmte oder eine ebene Fläche sein. Die Höhe der Fasenfläche, gemessen in radialer Richtung des Zahns, kann vorzugsweise zwischen 0,1 mm und 2 mm liegen, vorzugsweise zwischen 0,2 und 1,5 mm.

Die nachfolgende Figurenbeschreibung beschränkt sich auf die Erläuterung der wesentlichen Aspekte der Erfindung. Es ist klar, dass eine Reihe von Abwandlungen möglich sind. Kleinere, nicht beschriebene Details kann der Fachmann in der gewohnten Weise den Zeichnungen entnehmen, die insoweit die Figurenbeschreibung ergänzen.

In der Zeichnung ist ein Ausführungsbeispiel des Gegenstands der Erfindung dargestellt, es zeigen:
- Fig. 1: einen zweisträngigen Kettenzug in einer stark schematisierten perspektivischen Darstellung;
- Fig. 2: ein Kettenglied in einer Draufsicht auf die Kettengliedflanke;
- Fig. 3: eine Umlenkrolle in einer perspektivischen Darstellung, gemäß der Erfindung;
- Fig. 4: die Umlenkrolle geschnitten längs der Symmetrieebene der Kettentaschen und senkrecht zu der Drehachse;
- Fig. 5: das Zusammenspiel zwischen Rundgliederkette und erfindungsgemäßer Umlenkrolle bei unbelasteter Kette anhand eines Schnitts durch die Umlenkrolle rechtwinklig zu der Drehachse;
- Fig. 6: eine vergrößerte Ausschnittsdarstellung aus Fig. 5;
- Fig. 7: eine vergrößerte Ausschnittsdarstellung aus Fig.5, mit einem anderen Verlauf der Zahnflankenkrümmungslinie; und
- Fig. 8: eine Tabelle für günstige Werte zur Dimensionierung der Umlenkrolle in Abhängigkeit von den Kettenparametern.

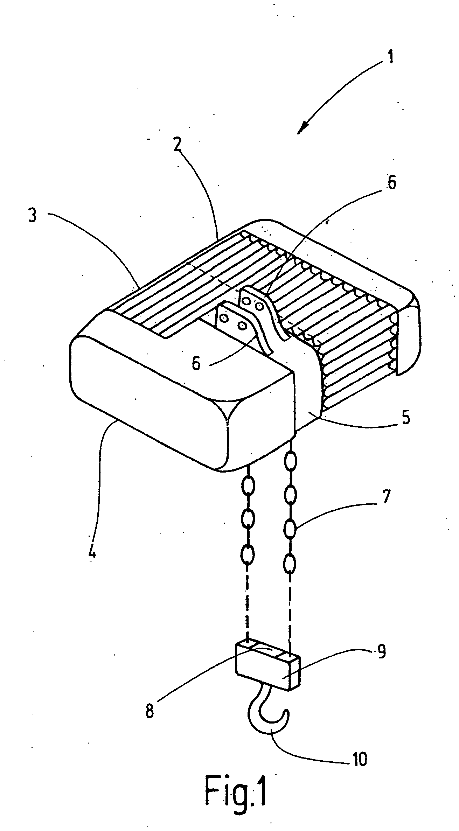

Als Beispiel für die Anwendung der Erfindung zeigt Fig. 1 in einer vereinfachten perspektivischen Darstellung einen zweisträngigen Kettenzug 1. Der Kettenzug 1 weist ein etwa quaderförmiges Getriebegehäuse 2 auf, an dessen einer Stirnseite ein Elektromotor 3 in Gestalt eines Asynchronmotors angeflanschten ist. Sowohl das Getriebegehäuse 2 als auch der Motor 3 sind mit durchlaufenden Kühlrippen versehen, wie dies die Figur erkennen lässt. Auf der von dem Getriebegehäuse 2 abliegenden Seite ist an dem Motor 3 ein Deckel 4 vorgesehen, der die Steuerung bzw. wesentliche Teile der Steuerung enthält. Zwischen dem Steuerungsdeckel 4 und der gegenüberliegenden Stirnseite des Getriebegehäuses befindet sich ein kettennussgehäuse 5, aus dessen Oberseite Laschen 6 vorstehen, die der Aufhängung des Kettenzugs 1 dienen. Unten aus dem Kettennussgehäuse 6 führt eine Rundgliederkette 7 weg, zu einer Umlenkrolle 8, die in einem Hakengehäuse 9 frei drehbar gelagert ist. An der Unterseite des Hakengehäuses 9 ist ein Haken 10 befestigt. Nach der Umlenkung führt die Rundgliederkette wieder nach oben zu dem Kettennussgehäuse 5, wo ihr freies Ende verankert ist.

Wie sich aus der Darstellung der Fig. 1 ferner unschwer ergibt, wirkt in den beiden Strängen der Rundgliederkette 7 stets nur eine vertikal nach unten gerichtete Kraft. Die Kraftrichtung ist unabhängig davon, ob eine an dem Haken 10 hängende Last nach oben gezogen wird oder daran gehindert werden soll, nach unten herunter zu fallen. Auch bei der Abwärtsbewegung wirkt die Kraft in der Rundgliederkette 7 in derselben Richtung und abgesehen von der Anfahrbewegung auch mit derselben Größe wie beim Anheben.

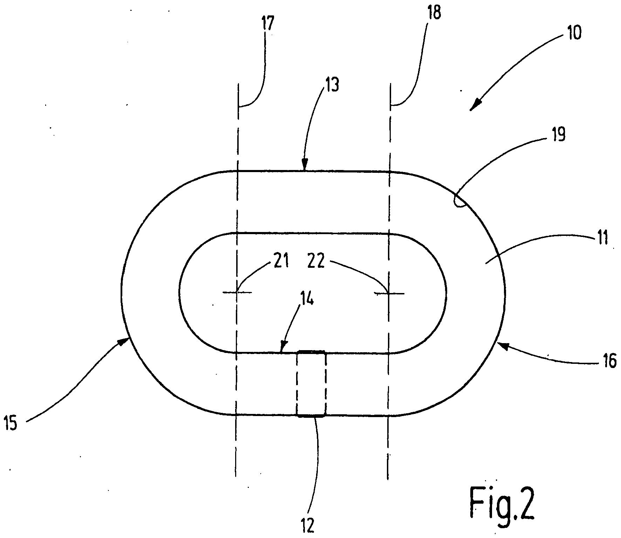

Die Rundgliederkette 7 setzt sich aus einer Vielzahl identischer Kettenglieder 11 zusammen, von denen eines exemplarisch in Fig. 2 in einer Draufsicht auf die Flachseite gezeigt ist. Das Kettenglied 11 besteht aus einem zu einem oval gebogenen Runddrahtabschnitt 12 mit geeignetem Durchmesser. Der Drahtabschnitt ist an seinen Enden auf Stoß zusammengelegt und bei 13 stumpf verschweißt. Durch die Art der Biegung des Kettengliedes entstehen zwei zueinander parallele Abschnitte 14 und 15, sowie zwei Halbkreisbögen 16 und 17. Die beiden Halbkreisbögen 16 und 17 gehen an den gestrichelten Linien 18 und 19 in die geraden Abschnitte 14 und 15 über. Die Außenkontur des Kettenglieds 11 definiert so eine um das Kettenglied umlaufende Außenlinie 20. Aufgrund dieser Gestalt beschreibt die Außenlinie 20 im Bereich der beiden Halbkreisbögen 16 und 17 einen Halbkreis, dessen Mittelpunkt auf der gestrichelten Linie 18 bzw. 19 liegt und der zwischen den beiden geraden Abschnitten 14 und 15 mittig liegt. Die Mittelpunkte sind in Fig. 2 mit 21 und 22 bezeichnet.

Die benachbarten Kettenglieder würden, wenn sie mit dem gezeigten Kettenglied 11 verkettet sind, auf der Zeichenebene mit ihren Flachseiten senkrecht stehen.

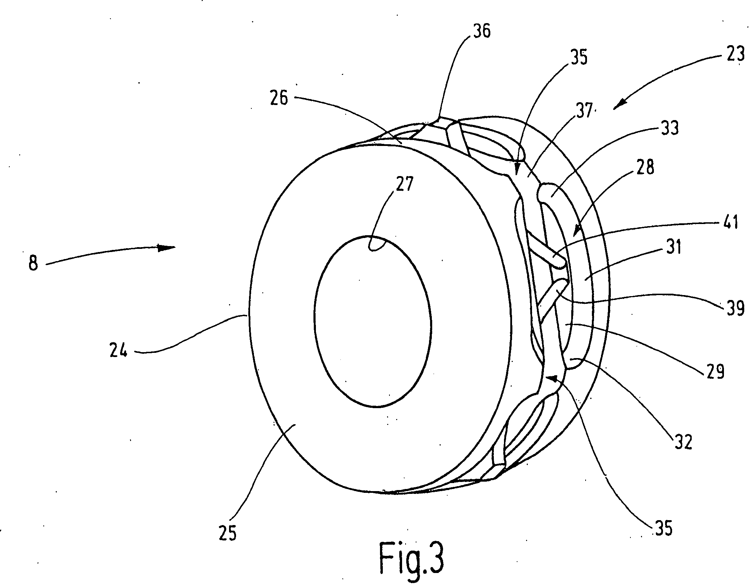

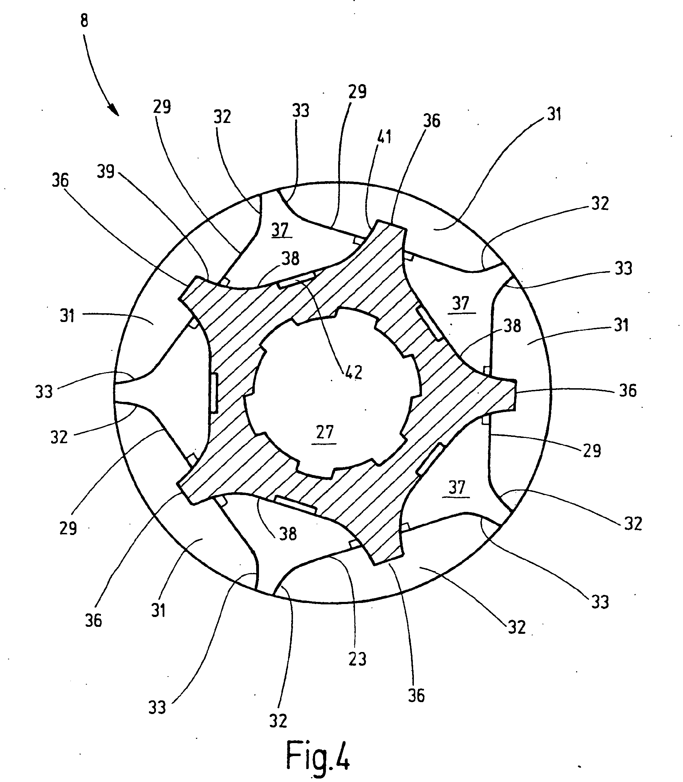

Die Figuren 3 und 4 zeigen eine Umlenkrolle 8, wie sie in dem Hakengehäuse 9 angeordnet ist. Mit Hilfe dieser Umlenkrolle 8, die mit der Rundgliederkette 7 formschlüssig zusammenwirkt, wird die Kraft, die von dem Haken 10 ausgeht, in die beiden Stränge der Kette 7 eingeleitet, bzw die kette 7 umgelenkt. Hierbei unterliegen die stehenden Kettenglieder einer besonderen Belastung, weil die Längskräfte nicht an der Längsachse des Kettenglieds 11 angreifen, sondern die Angriffspunkte an den Halbkreisbögen 16, 17 ein Stück weit in Richtung auf einen der beiden geraden Abschnitte 14 oder 15 verschoben sind.

Die Umlenkrolle 8 weist einen Grundkörper 24 auf, mit der Gestalt eines kurzen Zylinders, der von zwei zueinander - parallelen Planflächen 25 begrenzt ist, von denen wegen der Darstellung lediglich die eine erkennbar ist. Zwischen den Planflächen 25 erstreckt sich eine zylindrische Umfangsfläche 26. Koaxial zu der Umfangsfläche 26 ist eine Durchgangsöffnung 27 vorgesehen, die die Umlenkrolle 8 von der einen Planfläche 25 bis zur anderen durchsetzt. Mit Hilfe der Öffnung 27 wird die Umlenkrolle 8 auf einer Achse gelagert.

In der Außenumfangsfläche 26 sind hintereinander bei dem gezeigten Ausführungsbeispiel insgesamt vier Kettentaschen 28 für die liegenden Kettenglieder vorgesehen. Die Kettentaschen 28 sind längs dem Umfang äquidistant koaxial zu der Durchgangsöffnung 27 verteilt. Ihr Abstand voneinander entspricht dem Abstand, den die in den Kettentaschen 28 liegenden Kettenglieder 11 einnehmen würden, wenn die zugehörige Rundgliederkette 7 gestrafft aber ohne Spannung eingelegt wird.

Unter liegenden Kettengliedern versteht der Fachmann ein Kettenglied, das so ausgerichtet ist, dass die Flachseite, die dem Betrachter von Fig. 2 zugekehrt ist, zu der Drehachse, d.h. der Mittelachse der Durchgangsöffnung 27 zeigt.

Die Kettentaschen 28 haben untereinander identische Gestalt. Sie sind wannenförmig und werden von einem ebenen Taschenboden 29 sowie einer Wand 31 begrenzt. Die Wand 31 endet auf der Höhe der Außenumfangsfläche 26.

Der Verlauf der Wand 31 entspricht dem Verlauf der Außenlinie 20 des darin befindlichen Kettenglieds 11. Quer zur Umfangsrichtung liegend bildet die Wand 31 Anlage- oder Stirnflächen 32 und 33, an denen sich bei Belastung das betreffende Kettenglied 11 mit der Außenseite des Kreisbogens 16 bzw. 17 anlegen kann.

Der Taschenboden 29 ist eben, entsprechend der ebenen Flachseite der liegenden Kettenglieder 11.

Wegen der gekreuzten Anordnung der Kettenglieder einer Rundgliederkette müssen zwangsläufig die zwei liegenden Kettenglieder miteinander verbindende Kettenglieder, stehend angeordnet sein, d.h. ihre Flankenfläche, die parallel zu der Zeichenebene von Fig. 2 ist, steht auf der Drehachse der Umlenkrolle 8 senkrecht. Um die stehenden Kettenglieder 11 unterzubringen, enthält die Umlenkrolle 8 weitere Kettentaschen 35, die zahlenmäßig mit den Kettentaschen 28 für die liegenden Kettenglieder übereinstimmen. Die Kettentaschen 35 sind, wie die Figur erkennen lässt, so angeordnet, dass sie in Umfangsrichtung sich mit den Kettentaschen 28 überdecken. Gedanklich lassen sich die Kettentaschen 35 zusammensetzen aus einer in Umfangsrichtung verlaufenden Nut mit der Breite entsprechend der Dicke des Kettenglieds 11, wobei in entsprechenden Abständen aus der Nut Zähne 36 radial vorstehen. Somit haben die Taschen 35 ebenfalls eine etwa wannenförmige Gestalt und werden von zwei zueinander parallelen ebenen Seitenflächen 37 begrenzt, von denen in der Darstellung von Fig. 3 bzw. 4 lediglich eine erkennbar ist. Der Abstand der Seitenflächen 37 voneinander ist etwas größer als die Dicke des Kettenglieds 11.

Die Kettentaschen 35 werden ferner von einem Taschenboden 38 und zwei Zahnflankenflächen 39 und 41 begrenzt.

Erfindungsgemäß sollen auch die stehenden Kettenglieder gekammert bzw in Lastrichtung unterstüzt werden.

Lediglich der Vollständigkeit halber sei noch erwähnt, dass in dem Taschenboden 28 Vertiefungen 42 enthalten sein können, die die Schweißnaht 13 aufnehmen. Somit setzt sich die Begrenzung jeder Kettentasche 35 aus dem, mit Ausnahme der Ausnehmung 42, ebenen Taschenboden 38 zusammen, der an beiden Enden in die Zahnflanken 39 und 41 glatt übergeht. Beidseits der Ausnehmung 42 bildet der Taschenboden 38 gerade Abschnitte, d.h. Abschnitte, die auf einer Tangente liegen. Gerade bedeutet in diesem Falle nicht notwendigerweise auch eben. Der Taschenboden 38 kann genauso wie die Zahnflanken 39 und 41 eine Krümmung bezüglich einer Achse aufweisen, die in der Zeichenebene von Fig. 4 liegt. Mit anderen Worten, der Taschenboden 38 kann auch eine Hohlkehle darstellen, deren Krümmungsradius geringfügig größer ist als der Krümmungsradius des Drahtes, aus dem das Kettenglied 11 hergestellt ist.

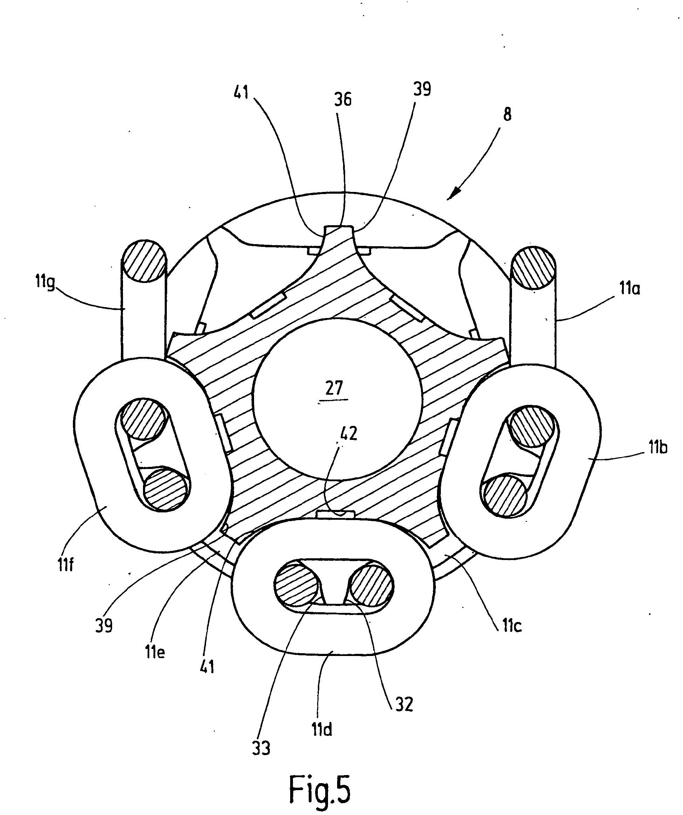

Das Zusammenwirken der Rundgliederkette 7 mit der Umlenkrolle 8 ergibt sich aus Fig. 5.

Die auf der Drehachse der Umlenkrolle 8 senkrecht stehende Symmetrieebene der Kettentaschen 28 ist gleichzeitig die Symmetrieebene der Kettentaschen 35 und auch die Symmetrieebene der Kettenglieder 11, wenn diese in den Kettentaschen 28 bzw. 35 liegen.

Fig. 5 zeigt die Umlenkrolle 8 geschnitten längs dieser Symmetrieebene, wie dies in Fig. 4 veranschaulicht ist. Die liegenden Kettenglieder 11 sind ebenfalls in dieser Symmetrieebene geschnitten, d.h. in einer Ebene, die auf der Zeichenebene von Fig. 2 senkrecht steht und durch die Mittelpunkte 21 und 22 führt.

In Fig. 5 sind die Kettenglieder mit dem Bezugszeichen 11 und zusätzlich mit einem Kleinbuchstaben bezeichnet, um sie voneinander besser unterscheiden zu können. Für alle gilt die Beschreibung im Zusammenhang mit Fig. 2.

Wie Fig. 5 erkennen lässt, läuft die Rundgliederkette rechts und links tangential von der Umlenkrolle 8 nach oben ab, wobei es für die weitere Betrachtung unerheblich ist welches Trum zur Verankerung führt und welches Trum mit der antreibenden Kettennuss verbunden ist; die Verhältnisse sind soweit es die Erfindung betrifft symmetrisch. In der gezeigten Stellung tritt eine maximale Belastung des stehenden Kettenglieds 11d auf. Das Kettenglied 11d lieg auf dem Scheitepunkt des Kettenverlaufs.

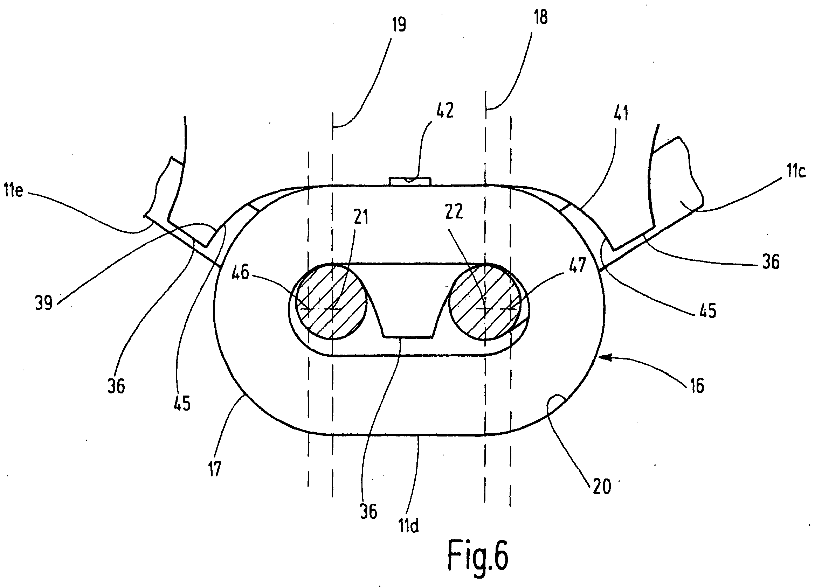

Fig. 6 zeigt in einer vergrößerten Ausschnittsdarstellung die Eingriffszusammenhänge zwischen dem Bug eines stehenden Kettengliedes, beispielsweise des Kettengliedes 11d, und der Zahnflanke 39 des benachbarten Zahns 36. Aus der Darstellung von Fig. 6 sind sämtliche Details, die nicht zur Erläuterung der Eingriffsverhältnisse von Bedeutung sind, weggelassen. Außerdem sind die Größenverhältnisse sehr stark übertrieben, um das Wesentliche erkennen zu können. Der Schnitt durch die Umlenkrolle 8 liegt in der Symmetrieebene, die auf der Drehachse der Umlenkrolle senkrecht steht. Es ist die zuvor erwähnte Symmetrieebene, die mittig zwischen den beiden Seitenflächen 37 der Kettentasche 35 verläuft. Sie verläuft somit auch, abgesehen vom Kippspiel mittig zwischen den beiden zueinander parallelen Flankenflächen des Kettengliedes 11d. Diese Flächen werden durch die Tangentialebene definiert, die das Kettenglied 11d an beiden Seiten parallel zu der Zeichenebene nach Fig. 2 bzw. 6 verlaufen. In dieser erkennbaren Schnittebene bildet die lastaufnehmende Flankenfläche 39 eine Zahnflankenkrümmungslinie 45, die der Außenlinie oder Außenkonturlinie 20 unmittelbar in Umfangsrichtung gegenübersteht (abgesehen wiederum vom Kippspiel).

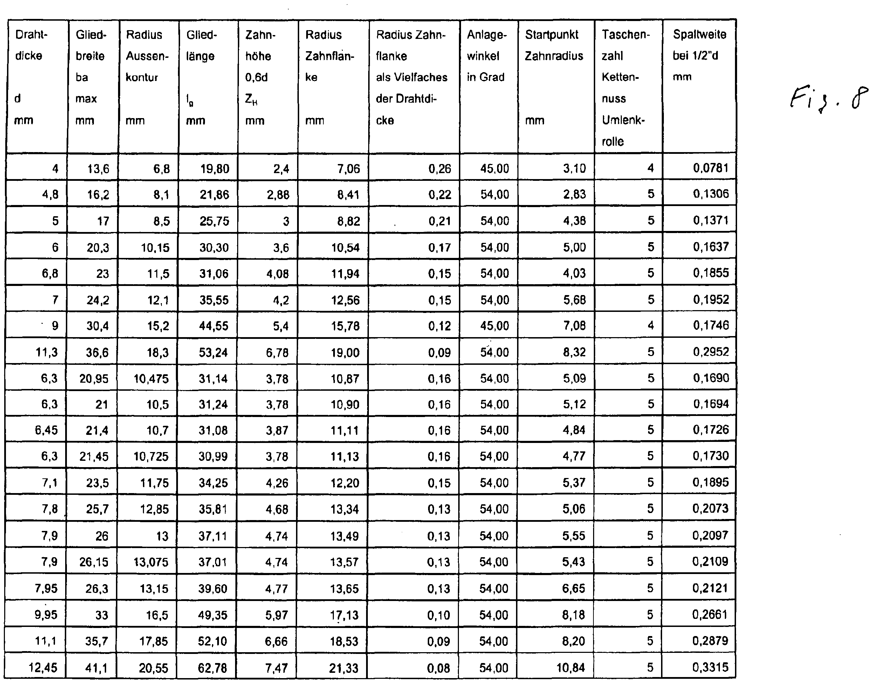

Die Zahnflankenkrümmungslinie 45 ist ein Kreisbogen, der bis zu der Spitze des benachbarten Zahns 36 reicht und tangential in den Taschenboden 38 einmündet. Der Mittelpunkt dieses die Zahnflankenkrümmungslinie 45 definierenden Kreises liegt bei 46, d.h. der Mittelpunkt 46 ist gegenüber dem Mittelpunkt 21 in Lastrichtung ein Stück weit parallel zu dem Taschenboden 38 verschoben. Das Maß der Verschiebung, d.h. der Abstand zwischen den beiden Mittelpunkten 21 und 46 ist abhängig von der Dimensionierung des Kettengliedes 11. In der nachfolgenden Tabelle in Fig. 8 sind günstige Werte für den Abstand a der Mittelpunkte in Abhängigkeit von der Dimensionierung des Kettenglieds 11 angegeben. Der Durchmesser des Kreises, der die Zahnflankenkrümmungslinie beschreibt haut denselben Durchmesser wie der Halbkreisbogen 16, 17.

Die Zahnflanke 41 ist in der gleichen Weise gestaltet, weshalb für die Zahnflankenkrümmungslinie dasselbe Bezugszeichen 45 verwendet wird. Die Zahnflankenkrümmungslinie 45 der Zahnflanke 41 des gegenüberliegenden Zahns 36 ist ebenfalls ein Kreisbogen der einen Mittelpunkt 47 definiert. der Mittelpunkt 47 ist von dem Mittelpunkt 22 um dasselbe Maß a beabstandet die der Abstand zwischen den Mittelpunkten 21 und 46, wenn das Kettenglied 11d zentriert zwischen den Kettengliedern 11c und 11e liegt.

Bei der Bemessung dieses Abstands a wurde davon ausgegangen, dass es sich um eine jungfräuliche Rundgliederkette handelt, die keine Verschleißerscheinungen zeigt. Sie liegt zwanglos über der Umlenkrolle 8, d.h. die liegenden Kettenglieder 11c und 11e liegen symmetriert in ihren Kettentaschen 28. Das stehende Kettenglied 11d ist zwischen diesen wiederum symmetrisch eingelegt; so dass auf diese Weise die Lage des Mittelpunkt 21 als Krümmungsmittelpunkt der Außenkonturlinie 20 erhalten wird.

Wie sich aus der Tabelle ergibt, ist der Keil, der sich aufgrund der Mittelpunktsverschiebung der beiden jeweils benachbarten Kreise ergibt sehr klein. Er ist letztendlich so bemessen, dass bei einer Belastung der Kette mit Nennlast in der Situation, wie sie in Fig. 5 gezeigt ist, durch die flachliegenden Kettenglieder 11c und 11e, das auf dem Scheitel liegende stehende Kettenglied 11d unter gleichzeitiger elastischer Verformung in die Länge gezogen wird. Zufolge dieser Verformung wird sich das stehende Kettenglied 11d mit seinem Bug, also dem Teil des Halbkreisbogens, der in Lastrichtung zeigt, an der Zahnflanke 39 anliegen. D.h. ab diesem Belastungswert wird die von dem liegenden Kettenglied 11e ausgehende Kraft zusätzlich über die Umlenkrolle auf das liegende Kettenglied 11c übertragen. Der Grundköper 24 der Umlenkrolle 8 liegt quasi im Bypass zu dem Kettenglied 11d.

Es hat sich herausgestellt, dass sich durch diese Konfiguration bei gleicher Kettenqualität die Kette bis zu höheren Lastwerten ausnutzen lässt. Die gefahrlose Laststeigerung ist bis zu 25 % gegenüber der sonstigen Nennlast möglich.

Es hat sich ferner herausgestellt, dass diese neue Umlenkrolle eine erhöhte Sicherheit bringt und weniger verschleißt.

Bei der vorausgehenden Beschreibung wurde davon augegangen, dass die Kette 8 eine Rundgliederkette ist, bei der die einzelnen Kettenglieder, wie mehrfach erläutert, aus einem Stück Runddraht gefertigt sind. Dementsprechend ist es von Vorteil, wenn die Zahnflanken 39 und 41 biaxial gekrümmt ist. Dies bedeutet, dass sie einerseits entsprechend dem Schmiegkreis gekrümmt ist und andererseits die Erzeugende für die lastaufnehmende Zahnflankenflächen 39 und 41 ein Kreisbogen ist, mit einem Durchmesser etwas größer als der Drahtdurchmesser, aus dem die Rundgliederkette hergestellt ist.

Das Maß der Flächenpressung wird dadurch reduziert.

Sinngemäß das gleiche kann im Bereich des Taschenbodens vorgenommen werden.

Im Interesse einer Vergrößerung der Traglast der Gliederkette laufen Bestrebungen, anstelle von Runddraht zur Herstellung der Kettenglieder einen Profildraht zu verwenden. Der Profildraht setzt sich aus einem Kreisbogenabschnitt und einem Ausschnitt eines Quadrates zusammen. Oder anders ausgedrückt, es handelt sich um einen quadratischen Querschnitt, bei dem auf der einen Seite, die einander benachbarten Ecken durch Viertelkreise ersetzt sind.

Auch bei dieser Art von Ketten kann die erfindungsgemäße Gestaltung der lastaufnehmende Zahnflanke 39 verwendet werden. Die lastaufnehmende Fläche 39 ist dann nicht mehr biaxial gekrümmt, wie dies oben im Zusammenhang mit der Rundgliederkette erwähnt ist, sondern die Erzeugende für die Fläche ist eine Gerade, die längs der Zahnflankenkrümmungslinie parallel zu der Drehachse geführt ist.

Schließlich ist es denkbar, als Umlenkrolle unbehandelten Stahl ausreichender Festigkeit zu verwenden, der nachträglich nicht wärmebehandelt ist. Hierzu werden die Kosten deutlich gesenkt.

Die gezeigte Umlenkrolle ist mit Bohrungen versehen, um auf eine Welle aufgesteckt zu werden. Es ist auch denkbar, die Umlenkrolle mit einer einstückig ausgehenden Welle auszubilden.

Je nach Situation kann es vorteilhaft sein, wenn der Radius der Zahnflankenkrümmungslinie 45 größer ist als der Radius der Außenkonturlinie 20. Der Mittelpunkt 46 bzw 47 ist in diesem Falle bezogen auf die Darstellung zusätzlich nach oben verschoben. Das Maß der Verschiebung sorgt dafür, dass weiterhin die Zahnflankenkrümmungslinie 45 tangential in den Taschenboden 38 einmündet.

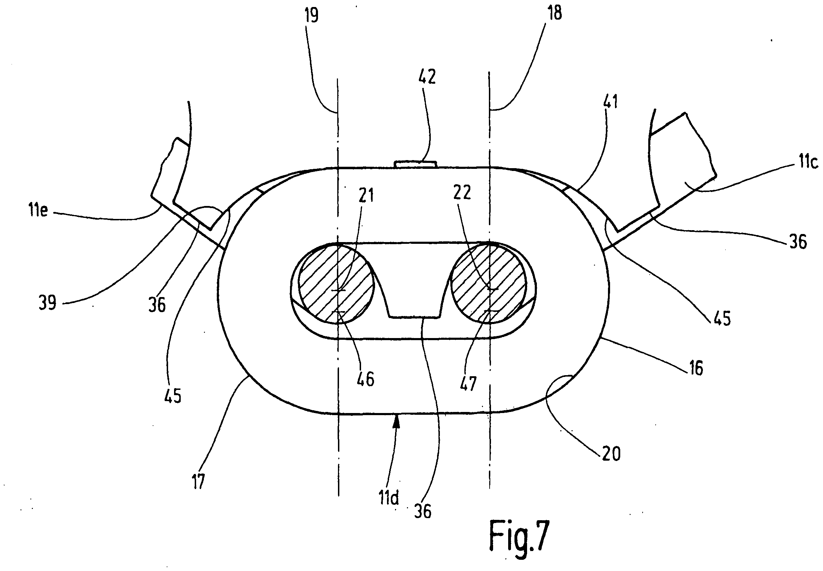

Fig. 7 zeigt ein weiteres Ausführungsbeispiel der Erfindung. Der erforderliche Abstand zwischen der Außenkonturlinie 20 des Kettenglieds 11d und der benachbarten Zahnflanke 39 bzw. 41 wird hier nicht, wie bei dem obigen Ausführungsbeispiel gemäß Fig. 6, durch eine Verschiebung des Schmiegkreise erreicht. Der Abstand wird hier vielmehr erzeugt, indem die Zahnflankenkrümmungslinie 45 einen Schmiegkreis definiert, dessen Radius, beispielsweise gemäß Tabelle 8, gegenüber dem Radius der Außenkonturlinie 20 im Bereich der Halbkreisbögen vergrößert ist.

Da im Bereich der Kettentasche 35 Knickstellen vermieden werden müssen, die sonst zu Einprägungen an der Außenseite des Kettengliedes 11 führen könnten, ist der Mittelpunkt 46 auf der Trenngeraden 17 bzw. 18 von den Taschenboden 38 weg verschoben. Dadurch mündet der Taschenboden 38 mit seinem geraden Abschnitt unmittelbar tangential, und damit knickfrei, in die Zahnflankenkrümmungslinie 45 ein. Die Mittelpunkte 21 und 46 liegen somit auf der Trenngeraden 17, die den Halbkreisbogen 15 von den geraden Abschnitten 12, 13 trennt, während der Krümmungsmittelpunkt 47 auf der Trenngeraden 18 liegt, die die geraden Abschnittes 13, 14 von dem Halbkreisbogen 16 trennt. Der Abstand zwischen den Mittelpunkten 21, 46 bzw. 22, 47 voneinander entspricht der Radiusdifferenz.

Im übrigen ist die Wirkung wie oben ausführlich beschrieben.

Schließlich ist es noch denkbar, die Zahnflankenkrümmungslinie nicht als Kreisbogenausschnitt zu bemessen, sondern ihr eine Gestalt zu geben, die die Außenkonturlinie 20 in diesem Bereich unter Last annimmt. Auch in diesem Falle lassen sich sowohl für die Zahnflankenkrümmungslinie 45 als auch für die Außenkonturlinie 20 Schmiegkreise definieren, die gemäß Fig. 6 und der obigen Tabelle gegeneinander verschoben sind. Diese Schmiegkreise stellen Näherungskurven dar, die beispielsweise durch eine Art Regressionsanalyse nach dem Gesichtspunkt der kleinsten Fehlerquadrate ermittelt werden. Die Abstandsmessung und die Anpassung an den Schmiegkreis erfolgt dabei ausgehend von dem Radien des jeweils gedachten Kreises. Die Tabelle ist für eine Belastung von 160 N/mm² berechnet und getestet.

Die Höhe jedes Zahns 36 bewegt sich im Spannungsfeld zwischen guten Laufeigenschaften der Kette 8 und Maximierung des Drehwegs, längs dem die Kraft zwischen Umlenkrolle und stehendem Kettenglied übertragen wird. Günstige Werte für die Höhe des Zahns 36 liegen zwischen dem 0,16-fachen und dem 0,75-fachen der Dicke des Drahts aus dem das Kettenglied 10 hergestellt ist. Die Höhe ist gemessen als Abstand zwischen einer Ebene und der Zahnspitze. Die Bezugsebene ist die Tangentialebene an der unteren Flankenfläche des liegenden Kettenglieds, durch das der Zahn 36 hindurchragt.

Die Ein- und Ablaufverhältnisse lassen sich verbessern, wenn der Zahn 36 an seiner Zahnspitze mit einer Fase versehen ist. Die Höhe oder Breite der Fase liegt zwischen 0,1 und 1,5 mm.

Eine Umlenkrolle für Gliederketten, beispielsweise Rundgliederketten oder Profilstahlketten, weist am Umfang Kettentaschen für liegende Kettenglieder auf. Es sind ferner Kettentaschen für stehende Kettenglieder vorgesehen. Die Kettentaschen für die stehenden Kettenglieder sind durch Zähne voneinander getrennt. Die Zahnflankenflächen der Zähne, gegen die sich ein stehendes Kettenglied unter der Wirkung einer Last anlegt, sind in spezieller Weise dimensioniert und profiliert. Die Dimensionierung geschieht so, dass bis zu einer bestimmten Kettenbelastung das stehende Kettenglied mit seinem Bug nicht an der Zahnflanke anliegt. Ein Kontakt zwischen der Zahnflankenfläche und dem Bug des betreffenden stehenden Kettenglieds findet erst ab einer bestimmten Kettenbelastung statt.

## Patentansprüche

1. Anordnung aus einer Gliederkette (7) und einer Umlenkrolle (8) zum Umlenken der Gliederkette (7), wie eine Rundgliederkette oder eine Profilstahlkette, insbesondere von Kettenzügen (1), wobei jedes Kettenglied (11) aus einem gebogenen Draht besteht und eine ebene Gestalt aufweist, die sich aus zwei zueinander parallelen Abschnitten (13,14) und zwei Halbkreisbögen (16,17) zusammensetzt,
wobei die Umlenkrolle (8) aufweist:
einen Grundköper (24), der eine Außenumfangsfläche (26) und eine Drehachse aufweist,
erste Kettentaschen (28), die sich an der Außenumfangsfläche (26) befinden und die dazu eingerichtet sind die liegenden Kettenglieder (11) aufzunehmen und Kraft von der Umlenkrolle (8) auf die liegenden Kettenglieder (11) zu übertragen,
zweite Kettentaschen (35),
- die sich an der Außenumfangflächen (26) befinden,
- die dazu eingerichtet sind die stehenden Kettenglieder (11) aufzunehmen,
- deren Anzahl der Anzahl der ersten Kettentaschen (28) für die liegenden Kettenglieder (11) entspricht,
- von denen jede für die steheden Kettenglieder Auflagebereiche (38) aufweist, auf denen sich das jeweilige Kettenglied (11) zumindest mit einem an den Kreisbogen (16,17) anschließenden Teil seines geraden Abschnitts (13,14) auflegen kann, und
- von denen je eine zwischen benachbarten ersten Kettentaschen (28) für die liegenden Kettenglieder (11) diese ersten Kettentaschen (28) überschneidend angeordnet ist und
Zähne (36),
- von denen je einer zwischen zwei benachbarten zweiten Kettentaschen (35) für die stehenden Kettenglieder (11) angeordnet ist,
- die dazu eingerichtet sind das stehende Kettenglied (11) zu kammern und
- von denen jeder von zwei Zahnflanken (39,41) begrenzt ist, die in Umfangsrichtung zeigen,
wobei jeder der beiden eine zweite Kettentasche (35) begrenzenden Zahnflanken (39,41) der benachbarten Zähne (36) in der auf der Drehachse senkrecht stehenden Symmetrieeben der zweiten Kettentaschen (35) für die stehenden Kettenglieder (11) eine Zahnflankenkrümmungslinie (45) definiert, die zumindest angenähert dem gekrümmten Verlauf entspricht, den die Außenlinie (20) des benachbarten und in Lastrichtung zeigenden Halbkreisbogens (16,17) eines stehenden Kettenglieds (11) aufweist, das sich in der zugehörigen Kettentasche (35) befindet, und
wobei die Lage der beiden Zahnflanke (39,41) derart bemessen ist, dass deren Zahnflankenkrümmungslinie (45) gemessen in der Symmetrieebene zumindest in der Nähe der Zahnspitze einen Abstand von der in Lastrichtung zeigenden Außenlinie (20) des Halbkreisbogens (16,17) eines in der zugehörigen Kettentasche (35) befindlichen stehenden Kettenglieds (11) aufweist, wenn die beiden benachbarten liegenden Kettenglieder (11) zentriert und ohne Einwirken einer äußeren Kraft in ihren zugehörigen ersten Kettentaschen (28) liegen und zwischen den Kettengliedern (11) kein Spiel besteht.

2. Anordnung (7, 8) nach Anspruch 1, **dadurch gekennzeichnet, dass** der Zahn (36) über einer Fläche, die durch die der Drehachse benachbarte Flankenfläche des liegenden Kettenglieds (11) definiert ist, eine Höhe
aufweist, die zwischen dem 0,16-fachen und dem 0,75-fachen der Dicke des Kettenglieds liegt.

3. Anordnung (7, 8) nach Anspruch 1, **dadurch gekennzeichnet, dass** die Zahnflanke (38,41) biaxial gekrümmt ist.

4. Anordnung (7, 8) nach Anspruch 3, **dadurch gekennzeichnet, dass** die andere Krümmung einen Radius aufweist, der nicht kleiner ist als der halbe Durchmesser des Drahts ist, aus dem das Kettenglied (11) hergestellt ist.

5. Anordnung (7, 8) nach Anspruch 1, **dadurch gekennzeichnet, dass** die Außenlinie (20) des Halbkreisbogens (16,17) eines in die Umlenkrolle (8) eingelegten stehenden Kettenglieds (11) zumindest angenähert einen Kettengliedschmiegkreis mit einem Mittelpunkt (21,22) definiert, dass die Zahnflankenkrümmungslinie (45) der Zahnflanke (39,41) einen Zahnflankenschmiegkreis mit einem (46,47) Mittelpunkt definiert, und dass der Mittelpunkt (46,47) jedes Zahnflankenschmiegkreises gegenüber dem Mittelpunkt (21,22) des benachbarten Kettengliedschmiegkreis aus der Sicht des Kettenglieds (11) in Lastrichtung verschoben ist.

6. Anordnung (7, 8) nach Anspruch 5, **dadurch gekennzeichnet, dass** die Verschiebung in Lastrichtung zeigt.

7. Anordnung (7, 8) nach Anspruch 5, **dadurch gekennzeichnet, dass** die Verbindungsgerade zwischen den beiden benachbarten Mittelpunkten (21,46;22,47) parallel zu den geraden Abschnitten (14,15) des stehenden Kettenglieds (11) verläuft.

8. Anordnung (7, 8) nach Anspruch 5, durch gekennzeichnet, dass die Verbindungsgerade zwischen den beiden benachbarten Mittelpunkten (21,46;2247) unter einem spitzen Winkel zu den Längsachsen der geraden Abschnitte (14,15) des stehenden Kettenglieds verläuft.

9. Anordnung (7, 8) nach Anspruch 5, durch gekennzeichnet, dass die Verbindungsgerade zwischen den beiden benachbarten Mittelpunkten (21,46;2247) unter einem rechten Winkel zu den Längsachsen der geraden Abschnitte (14,15) des stehenden Kettenglieds verläuft.

10. Anordnung (7, 8) nach Anspruch 5, **dadurch gekennzeichnet, dass** der Abstand zwischen den Mittelpunkten (21,46;22,47) der Schmiegkreise zwischen dem 0,06-fachen und dem 0,1-fachen, vorzugsweise zwischen dem 0,082-fachen und dem 0,096-fachen des Drahtdurchmessers des Kettenglieds (11) liegt.

11. Anordnung (7, 8) nach Anspruch 1, **dadurch gekennzeichnet, dass** die Zahnflankenkrümmungslinie (45) exakt kreisförmig ist.

12. Anordnung (7, 8) nach Anspruch 1, **dadurch gekennzeichnet, dass** die Zahnflankenkrümmungslinie (45) denselben Verlauf aufweist, wie die Außenlinie (20) des der jeweiligen Zahnflanke (39,41) benachbarten Halbkreisbogens (16,17) eines mit der Nennlast belasteten Kettenglieds (11).

13. Anordnung (7, 8) nach Anspruch 1, **dadurch gekennzeichnet, dass** sie aus gehärtetem, vorzugsweise einsatzgehärtetem, oder unbehandelten Stahl besteht.

14. Anordnung (7, 8) nach Anspruch 1, **dadurch gekennzeichnet, dass** sie eine Achsbohrung (27) enthält, mit der sie auf eine Welle/Achse aufsteckbar ist.

15. Anordnung (7, 8) nach Anspruch 1, **dadurch gekennzeichnet, dass** die Kettentaschen (28) für die liegenden Kettenglieder (11) wannenförmig gestaltet sind.

16. Anordnung (7, 8) nach Anspruch 1, **dadurch gekennzeichnet, dass** die Kettentaschen (35) für die stehenden Kettenglieder (1) von zwei in bzw gegen die Umfangsrichtung zeigenden Zahnflanken (39,41) und einem Taschenboden (38) definiert ist.

17. Anordnung (7, 8) nach Anspruch 16, **dadurch gekennzeichnet, dass** der Taschenboden (38) gekrümmt ist, wobei dessen Krümmungsachse rechtwinkelig zu der Drehachse liegt.

18. Anordnung (7, 8) nach Anspruch 16, **dadurch gekennzeichnet, dass** der Taschenboden (38) eben ist.

19. Anordnung (7, 8) nach Anspruch 16, **dadurch gekennzeichnet, dass** der Taschenboden (38) mittig eine Vertiefung (42) zur Freistellung einer Schweißnaht (13) des Kettenglieds (11) aufweist.

20. Anordnung (7, 8) nach Anspruch 1, **dadurch gekennzeichnet, dass** der Radius des Schmiegkreises der Zahnflankenkrümmungslinie (45) größer ist als der Radius des Schmiegkreises der Außenlinie (20) des Halbkreisbogens (16,17).

21. Anordnung (7, 8) nach Anspruch 20, **dadurch gekennzeichnet, dass** das Verhältnis der Radien zwischen dem 1,0-fachen und dem 1,2-fachen liegt.

22. Anordnung (7, 8) nach Anspruch 20, **dadurch gekennzeichnet, dass** das Verhältnis der Radien zwischen dem 0,08-fachen und dem 0,3-fachen des Drahtdurchmessers liegt.

23. Anordnung (7, 8) nach Anspruch 1, **dadurch gekennzeichnet, dass** die Zahnflanke (39,41) in Richtung auf die Zahnspitze in eine Fasenfläche übergeht.

24. Anordnung (7, 8) nach Anspruch 23, **dadurch gekennzeichnet, dass** die Höhe der Fasenfläche abhängig vom Drahtdurchmesser des Kettenglieds zwischen 0,1 mm und 1,5 mm liegt.

25. Anordnung (7, 8) nach Anspruch 1, **dadurch gekennzeichnet, dass** die Umlenkrolle (8) einen einstückigen Achszapfen aufweist.

26. Anordnung (7, 8) nach Anspruch 1, **dadurch gekennzeichnet, dass** die Zähne (36) in dem Bereich, der über den Taschenboden (29) für ein liegendes Kettenglieds (10) radial vorsteht eine Breite haben, die nur geringfügig kleiner ist als der lichte Abstand der geraden Abschnitte (14,15) des Kettenglieds (10) voneinander.

27. Anordnung (7, 8) nach Anspruch 1, **dadurch gekennzeichnet, dass** bei einer vorgegebenen Spannungsbelastung größer 0 N/mm², vorzugsweise zwischen 100% und 75% der Nennspannung der Gliederkette (8) der Abstand zwischen der Zahnflankenkrümmungslinie (45) und der Außenlinie (19) des Halbkreisbogens (15,16) verschwindet.

28. Anordnung (7, 8) nach Anspruch 27, **dadurch gekennzeichnet, dass** die Nennspannung zwischen 320 N/mm² und 80 N/mm², vorzugsweise 200 N/mm² und 100 N/mm² beträgt.

29. Anordnung (7, 8) nach Anspruch 27, **dadurch gekennzeichnet, dass** die Nennspannung aus der nominellen Tragfähigkeit des Kettentriebs ohne Berücksichtigung eines dynamischen Anteils und des Drahtquerschnitts des Kettenglieds errechnet wird.

## Claims

1. Arrangement comprising a link chain (7) and a deflection roller (8) for deflecting the link chain (7) such as a round link chain or a sectional steel chain, in particular of chain hoists (1), wherein each chain link (11) consists of a bent wire and has a plane structure, which consists of two parallel sections (13, 14) and two semicircular arcs (16, 17),
wherein the deflection roller (8) has:
a base body (24), which has an outer peripheral face (26) and a rotational axis,
first chain recesses (28), which are located on the outer peripheral face (26) and are arranged to receive the horizontally lying chain links (11) and transfer force from the deflection roller (8) to the horizontally lying chain links (11),
second chain recesses (35),
• which are located on the outer peripheral face (26),
• which are arranged to receive the vertical chain links (11),
• the number of which corresponds to the number of first chain recesses (28) for the horizontally lying chain links (11),
• each of which has supporting regions (38) for the vertical chain links, on which the respective chain link (11) can lie at least with a portion of its straight section (13, 14) adjoining the circular arc (16, 17), and
• one of which is respectively arranged between adjacent first chain recesses (28) for the horizontally lying chain links (11) to overlap these first chain recesses (28), and
teeth (36),
• one of which is respectively arranged between adjacent second chain recesses (35) for the vertical chain links (11),
• which are arranged to clamp? the vertical chain link (11), and
• each of which is delimited by two tooth flanks (39, 41) facing in peripheral direction,
wherein each of the two tooth flanks (39, 41) of the adjacent teeth (36) delimiting a second chain recess (35) defines a tooth flank line of curvature (45) in the plane of symmetry perpendicular to the rotational axis of the second chain recesses (35) for the vertical chain links (11), said line of curvature corresponding at least approximately to the curved course that the outer line (20) of the adjacent semicircular arc (16, 17) pointing in the direction of load of a vertical chain link (11) located in the appropriate chain recess (35) has, and
wherein the position of the two tooth flanks (39, 41) is dimensioned such that its tooth flank line of curvature (45) measured in the plane of symmetry at least in the vicinity of the tooth tip is spaced from the outer line (20) pointing in the direction of load of the semicircular arc (16, 17) of a vertical chain link (11) located in the appropriate chain recess (35) when both adjacent horizontally lying chain links (11) are centred and lie in their appropriate first chain recesses (28) without application of any external force and when there is no play between the chain links (11).

2. Arrangement (7, 8) according to claim 1, **characterised in that** over a surface defined by the flank surface of the horizontally lying chain link (11) adjacent to the rotational axis the tooth (36) has a height amounting to between 0.16-times and 0.75-times the thickness of the chain link.

3. Arrangement (7, 8) according to claim 1, **characterised in that** the tooth flank (38, 41) is curved biaxially.

4. Arrangement (7, 8) according to claim 3, **characterised in that** the other curvature has a radius, which is smaller than half the diameter of the wire, from which the chain link (11) is made.

5. Arrangement (7, 8) according to claim 1, **characterised in that** the outer line (20) of the semicircular arc (16, 17) of a vertical chain link (11) inserted into the deflection roller (8) at least approximately defines a chain link circle of curvature with a centre point (21, 22), that the tooth flank line of curvature (45) of the tooth flank (39, 41) defines a chain link circle of curvature with a centre point (46, 47), and that the centre point (46, 47) of each tooth flank circle of curvature is displaced in the direction of load in relation to the centre point (21, 22) of the adjacent chain link circle of curvature viewed from the chain link (11).

6. Arrangement (7, 8) according to claim 8, **characterised in that** the displacement is directed in the direction of load.

7. Arrangement (7, 8) according to claim 5, **characterised in that** the connecting straight line between the two adjacent centre points (21, 46; 22, 47) runs parallel to the straight sections (14, 15) of the vertical chain link (11).

8. Arrangement (7, 8) according to claim 5, **characterised in that** the connecting straight line between the two adjacent centre points (21, 46; 22, 47) runs at an acute angle to the longitudinal axes of the straight sections (14, 15) of the vertical chain link.

9. Arrangement (7, 8) according to claim 5, **characterised in that** the connecting straight line between the two adjacent centre points (21, 46; 22, 47) runs at a right angle to the longitudinal axes of the straight sections (14, 15) of the vertical chain link.

10. Arrangement (7, 8) according to claim 5, **characterised in that** the distance between the centre points (21, 46; 22, 47) of the circles of curvature amounts to between 0.06-times and 0.1-times, preferably between 0.082-times and 0.096-times the wire diameter of the chain link (11).

11. Arrangement (7, 8) according to claim 1, **characterised in that** the tooth flank line of curvature (45) is exactly circular.

12. Arrangement (7, 8) according to claim 1, **characterised in that** the tooth flank line of curvature (45) has the same course as the outer line (20) of the semicircular arc (16, 17) adjacent to the respective tooth flank (39, 41) of a chain link (11) loaded with the nominal load.

13. Arrangement (7, 8) according to claim 1, **characterised in that** it is made of hardened, preferably case-hardened, or untreated steel.

14. Arrangement (7, 8) according to claim 1, **characterised in that** it contains a shaft hole (27), with which it can be attached onto a shaft/axis.

15. Arrangement (7, 8) according to claim 1, **characterised in that** the chain recesses (28) for the horizontally lying chain links (11) are trough-shaped.

16. Arrangement (7, 8) according to claim 1, **characterised in that** the chain recesses (35) for the vertical chain links (11) are defined by two tooth flanks (39, 41) pointing in or towards the peripheral direction and a recess base (38).

17. Arrangement (7, 8) according to claim 16, **characterised in that** the recess base (38) is curved, wherein the axis of curvature thereof lies at right angles to the rotational axis.

18. Arrangement (7, 8) according to claim 16, **characterised in that** the recess base (38) is plane.

19. Arrangement (7, 8) according to claim 16, **characterised in that** the recess base (38) has a depression (42) in the centre to allow for a weld (13) of the chain link (11).

20. Arrangement (7, 8) according to claim 1, **characterised in that** the radius of the circle of curvature of the tooth flank line of curvature (45) is larger than the radius of the circle of curvature of the outer line (20) of the semicircular arc (16, 17).

21. Arrangement (7, 8) according to claim 20, **characterised in that** the ratio of the radii amounts to between 1.0-times and 1.2-times.

22. Arrangement (7, 8) according to claim 20, **characterised in that** the ratio of the radii amounts to between 0.08-times and 0.3-times the wire diameter.

23. Arrangement (7, 8) according to claim 1, **characterised in that** the tooth flank (39, 41) merges into a bevel face in the direction of the tooth tip.

24. Arrangement (7, 8) according to claim 23, **characterised in that** the height of the bevel face amounts to between 0.1 mm and 1.5 mm depending on the wire diameter of the chain link.

25. Arrangement (7, 8) according to claim 1, **characterised in that** deflection roller (8) has an integral journal.

26. Arrangement (7, 8) according to claim 1, **characterised in that** in the region projecting radially beyond the recess base (29) for a horizontally lying chain link (10) the teeth (36) have a width, which is only slightly smaller than the clearance between the straight sections (14, 15) of the chain link (10).

27. Arrangement (7, 8) according to claim 1, **characterised in that** the spacing between the tooth flank line of curvature (45) and the outer line (19) of the semicircular arc (15, 16) disappears with a predefined stress load greater than 0 N/mm², preferably between 100% and 75% of the nominal stress of the link chain (8).

28. Arrangement (7, 8) according to claim 27, **characterised in that** the nominal stress amounts to between 320 N/mm² and 80 N/mm², preferably 200 N/mm² and 100 N/mm².

29. Arrangement (7, 8) according to claim 27, **characterised in that** the nominal stress is calculated from the nominal load-bearing capacity of the chain drive, without taking into account a dynamic component and the wire cross-section of the chain link.

## Revendications

1. Agencement constitué d'une chaîne à maillons (7) et d'une poulie de renvoi (8) pour dévier la chaîne à maillons (7), telle qu'une chaîne à maillons ronds ou une chaîne en acier profilé, en particulier de palans à chaîne (1), chaque maillon de chaîne (11) étant constitué d'un fil métallique courbé, et présentant une forme plate qui se compose de deux tronçons (14, 15) mutuellement parallèles et de deux arcs en demi-cercles (16, 17), la poulie de renvoi (8) présentant :
un corps de base (24) qui comporte une surface périphérique extérieure (26) et un axe de rotation,
des premiers logements de chaîne (28) qui se trouvent sur la surface périphérique extérieure (26) et qui sont conçus pour recevoir les maillons de chaîne (11) disposés à plat et pour transmettre une force de la poulie de renvoi (8) aux maillons de chaîne (11) disposés à plat,
des deuxièmes logements de chaîne (35),
- qui se trouvent sur la surface périphérique extérieure (26),
- qui sont conçus pour recevoir les maillons de chaîne (11) disposés debout,
- dont le nombre correspond au nombre de premiers logements de chaîne (28) pour les maillons de chaîne (11) disposés à plat,
- qui présentent chacun des zones d'appui (38) pour les maillons de chaîne disposés debout, sur lesquelles le maillon (11) respectif peut s'appuyer au moins avec une partie de son tronçon (14, 15) rectiligne qui se raccorde à l'arc de cercle (16, 17), et
- parmi lesquels chaque fois un logement est disposé entre des premiers logements de chaîne (28) voisins pour les maillons (11) disposés debout, en coupant ces premiers logements de chaîne (28), et
des dents (36),
- parmi lesquelles chaque fois une dent est disposée entre deux deuxièmes logements de chaîne (35) voisins pour les maillons de chaîne (11) debout,
- qui sont conçues pour former des parois pour le maillon de chaîne (11) debout, et
- qui sont chacune délimitées par deux flancs de dents (39, 41) qui sont orientés dans la direction périphérique,
chacun des flancs (39, 41) des dents (36) voisines qui délimitent un deuxième logement de chaîne (35) définissant, dans le plan de symétrie des logements de chaîne (35) pour les maillons de chaîne (11) debout qui est perpendiculaire à l'axe de rotation, une ligne de courbure de flanc de dent (45) qui correspond au moins approximativement au tracé courbe que présente le contour extérieur (20) de l'arc en demi-cercle (16, 17), orienté dans le sens de la charge, d'un maillon de chaîne (11) debout qui se trouve dans le logement de chaîne (35) associé, et
la position des deux flancs de dent (39, 41) étant dimensionnée de manière telle que leur ligne de courbure de flanc de dent (45), mesurée dans le plan de symétrie, présente, au moins à proximité du sommet de la dent, une distance par rapport au contour extérieur (20), orienté dans le sens de la charge, de l'arc en demi-cercle (16, 17) d'un maillon (11) debout dans le logement de chaîne (35) associé, lorsque les deux maillons de chaîne (11) disposés à plat voisins sont centrés et se trouvent dans leurs premiers logements de chaîne (28) associés, sans action d'une force externe, et lorsqu'il n'y a pas de jeu entre les maillons de chaîne (11).

2. Agencement (7, 8) selon la revendication 1, **caractérisé en ce que** la dent (36) présente, au-dessus d'une surface définie par la surface de flanc du maillon de chaîne (11) disposé à plat qui est adjacente à l'axe de rotation, une hauteur qui est comprise entre 0,16 et 0,75 fois l'épaisseur du maillon de chaîne.

3. Agencement (7, 8) selon la revendication 1, **caractérisé en ce que** le flanc de dent (39, 41) présente une courbure biaxiale.

4. Agencement (7, 8) selon la revendication 3, **caractérisé en ce que** l'autre courbure présente un rayon qui n'est pas inférieur à la moitié du diamètre du fil métallique, à partir duquel est réalisé le maillon de chaîne (11).

5. Agencement (7, 8) selon la revendication 1, **caractérisé en ce que** le contour extérieur (20) de l'arc en demi-cercle (16, 17) d'un maillon de chaîne (11) debout, placé dans la poulie de renvoi (8), définit au moins approximativement un cercle osculateur de maillon de chaîne avec un centre (21, 22), **en ce que** la ligne de courbure de flanc (45) du flanc de dent (39, 41) définit un cercle osculateur de flanc de dent avec un centre (46, 47), et **en ce que** le centre (46, 47) de chaque cercle osculateur de flanc de dent est décalé dans le sens de la charge par rapport au centre (21, 22) du cercle osculateur de maillon de chaîne voisin, vu du maillon de chaîne (11).

6. Agencement (7, 8) selon la revendication 5, **caractérisé en ce que** le décalage est orienté dans le sens de la charge.

7. Agencement (7, 8) selon la revendication 5, **caractérisé en ce que** la droite de liaison entre les deux centres (21, 46; 22, 47) voisins est parallèle aux tronçons (14, 15) rectilignes du maillon de chaîne (11) debout.

8. Agencement (7, 8) selon la revendication 5, **caractérisé en ce que** la droite de liaison entre les deux centres (21, 46; 22, 47) voisins forme un angle aigu avec les axes longitudinaux des tronçons (14, 15) rectilignes du maillon de chaîne debout.

9. Agencement (7, 8) selon la revendication 5, **caractérisé en ce que** la droite de liaison entre les centres (21, 46; 22, 47) voisins forme un angle droit avec les axes longitudinaux des tronçons (14, 15) rectilignes du maillon de chaîne debout.

10. Agencement (7, 8) selon la revendication 5, **caractérisé en ce que** la distance entre les centres (21, 46; 22, 47) des cercles osculateurs est comprise entre 0,06 et 0,1 fois, de préférence entre 0,082 et 0,096 fois le diamètre du fil métallique du maillon de chaîne (11).

11. Agencement (7, 8) selon la revendication 1, **caractérisé en ce que** la ligne de courbure de flanc de dent (45) est exactement circulaire.

12. Agencement (7, 8) selon la revendication 1, **caractérisé en ce que** la ligne de courbure de flanc de dent (45) présente le même tracé que le contour extérieur (20) de l'arc en demi-cercle (16, 17), adjacent au flanc de dent (39, 41) respectif, d'un maillon de chaîne (11) soumis à la charge nominale.

13. Agencement (7, 8) selon la revendication 1, **caractérisé en ce qu'**il est constitué d'acier trempé, de préférence d'acier cémenté et trempé, ou d'acier non traité.

14. Agencement (7, 8) selon la revendication 1, **caractérisé en ce qu'**il comporte un alésage axial (27) avec lequel il peut être rapporté sur un arbre/axe.

15. Agencement (7, 8) selon la revendication 1, **caractérisé en ce que** les logements de chaîne (28) pour les maillons de chaîne (11) disposés à plat sont réalisés en forme de cuvettes.

16. Agencement (7, 8) selon la revendication 1, **caractérisé en ce que** les logements de chaîne (35) pour les maillons de chaîne (11) debout sont définis par deux flancs de dent (39, 41) orientés dans la direction périphérique, ou dans le sens opposé, et un fond de logement (38).

17. Agencement (7, 8) selon la revendication 16, **caractérisé en ce que** le fond de logement (38) est incurvé, son axe de courbure étant perpendiculaire à l'axe de rotation.

18. Agencement (7, 8) selon la revendication 16, **caractérisé en ce que** le fond de logement (38) est plan.

19. Agencement (7, 8) selon la revendication 16, **caractérisé en ce que** le fond de logement (38) présente au milieu un évidement (42) pour recevoir une soudure (13) du maillon de chaîne (11).

20. Agencement (7, 8) selon la revendication 1, **caractérisé en ce que** le rayon du cercle osculateur de la ligne de courbure de flanc de dent (45) est plus grand que le rayon du cercle osculateur du contour extérieur (20) de l'arc en demi-cercle (16, 17).

21. Agencement (7, 8) selon la revendication 20, **caractérisé en ce que** le rapport des rayons est compris entre 1,0 et 1,2 fois.

22. Agencement (7, 8) selon la revendication 20, **caractérisé en ce que** le rapport des rayons est compris entre 0,08 et 0,3 fois le diamètre du fil métallique.

23. Agencement (7, 8) selon la revendication 1, **caractérisé en ce que** le flanc de dent (39, 41) se raccorde à une surface chanfreinée, en direction du sommet de la dent.

24. Agencement (7, 8) selon la revendication 23, **caractérisé en ce que** la hauteur de la surface chanfreinée est comprise entre 0,1 mm et 1,5 mm, en fonction du diamètre du fil métallique du maillon de chaîne.

25. Agencement (7, 8) selon la revendication 1, **caractérisé en ce que** la poulie de renvoi (8) présente un tourillon réalisé d'une seule pièce.

26. Agencement (7, 8) selon la revendication 1, **caractérisé en ce que**, dans la zone dépassant radialement par rapport au fond de logement (29) pour un maillon de chaîne (11) disposé à plat, les dents (36) présentent une largeur qui n'est que légèrement inférieure à l'écartement intérieur entre les tronçons (14, 15) rectilignes du maillon de chaîne (11).

27. Agencement (7, 8) selon la revendication 1, **caractérisé en ce que**, pour une contrainte en tension prédéterminée supérieure à 0 N/mm², de préférence comprise entre 100 % et 75 % de la tension nominale de la chaîne à maillons (7), la distance entre la ligne de courbure de flanc de dent (45) et le contour extérieur (19) de l'arc en demi-cercle (15, 16) disparaît.

28. Agencement (7, 8) selon la revendication 27, **caractérisé en ce que** la tension nominale est comprise entre 320 N/mm² et 80 N/mm², de préférence entre 200 N/mm² et 100 N/mm².

29. Agencement (7, 8) selon la revendication 27, **caractérisé en ce que** la tension nominale est calculée à partir de la capacité de charge nominale du palan à chaîne, sans tenir compte d'une composante dynamique, ni de la section du fil métallique du maillon de chaîne.
